# EUROPEAN PATENT APPLICATION

(11) **EP 4 498 150 A1**
(43) Date of publication of application: **29.01.2025**
(21) Application number: 23773587.3
(22) Date of filing: 03.03.2023
(51) Int. Cl.: G02F 1/035, G02F 1/365, G02F 1/361, G02B 6/12, G02B 6/42

(54) **ELECTRO-OPTIC MODULATOR AND MANUFACTURING METHOD THEREFOR**

(30) Priority: 21.03.2022 CN 202210276684
(71) Applicant: Shanghai Xizhi Technology Co., Ltd., Shanghai 201203 (CN)
(72) Inventor: MENG, Huaiyu, Shanghai 201203 (CN); SHEN, Yichen, Shanghai 201203 (CN); SU, Zhan, Shanghai 201203 (CN); HUA, Shiyue, Shanghai 201203 (CN); DADI, Setiadi, Shanghai 201203 (CN); PENG, Bo, Shanghai 201203 (CN)
(74) Representative: Haseltine Lake Kempner LLP
(86) International application number: PCT/CN2023/079471
(87) International publication number: WO 2023/179336

(57) **Abstract**

The present invention relates to the technical field of semiconductors, and provides an electro-optical modulator and manufacturing method thereof. In certain embodiments, the electro-optical modulator comprises a hybrid waveguide with electrodes located on both sides of the hybrid waveguide. The method comprises: providing a first component, which includes a silicon layer and conductive wiring structures located on both sides of the silicon layer; providing a second component, which includes a nonlinear optical material layer and conductive wiring structures located on both sides of the nonlinear optical material layer; and bonding the first component to the second component, wherein the silicon layer and the nonlinear optical material layer are stacked to form the hybrid waveguide, and the conductive wiring structures located on both sides of the silicon layer are electrically connected to those located on both sides of the nonlinear optical material layer to form the electrodes. By implementing embodiments of the present invention, a compact, high-efficiency, low-power electro-optical modulator can be integrated into a silicon optical chip.

## Description

### CROSS-REFERENCE TO RELATED APPLICATION(S)

This application claims the benefit of, and priority to, the Chinese Patent Application No. 202210276684.2, titled "Electro-optical Modulator and Manufacturing Method Thereof," filed on March 21, 2022, which is herein incorporated by reference in its entirety.

### FIELD OF THE INVENTION

The present invention relates to the field of semiconductor technology, and more specifically, to an electro-optical modulator and manufacturing method thereof.

### BACKGROUND OF THE INVENTION

In the field of photonic computing, improving the energy efficiency ratio is a significant issue. The electro-optical modulator is the most critical device for realizing photonic computing, as well as a highly reused component in optoelectronic chips, with typically thousands or even tens of thousands integrated into a single chip. Reducing its power consumption in the modulator is one of the key factors in improving the energy efficiency of photonic computing.

Currently, silicon photonic chips commonly use modulators based on carrier dispersion effects. The modulation methods include carrier injection (forward bias) and depletion (reverse bias). The modulator types include micro-ring modulators or Mach-Zehnder interferometers (MZI). However, micro-ring modulators are sensitive to wavelength and temperature, making it difficult to achieve high-precision computation. Additionally, their overall power consumption remains high due to the need for additional heating and feedback control circuits. Injection-type MZIs offer high modulation efficiency and are suitable for high-density integration but generate a significant direct current (on the milliampere level) during operation, resulting in high static power consumption. Depletion-type MZIs exhibit lower modulation efficiency and require larger size. Furthermore, the presence of terminal loads in depletion-type MZIs limits their suitability for photonic computing, both in terms of power consumption and integration density.

### SUMMARY OF THE INVENTION

The present invention provides an electro-optical modulator and a method for its manufacture, facilitating the integration of a compact, highly efficient, and low-power electro-optical modulator into a silicon photonic chip.

Embodiments of the invention provide an electro-optical modulator comprising a hybrid waveguide including stacked silicon and nonlinear optical material layers, and an electrode including a first electrode and a second electrode disposed on both sides of the hybrid waveguide. The electro-optical modulator further comprises coupling ends extending from both ends of the hybrid waveguide for optical coupling, with at least one of these coupling ends including a tapered structure.

In some embodiments, the nonlinear optical material layer includes at least one of the following: a barium titanate layer, a lithium niobate layer, a lithium tantalate layer, and an organic polymer layer. Additionally, or alternatively, the silicon layer includes at least one of a monocrystalline silicon layer and a silicon nitride layer.

In some embodiments, the vertical projection of the silicon layer in the hybrid waveguide is within the vertical projection range of the nonlinear optical material layer.

In some embodiments, the tapered structure comprises a base section connected to the hybrid waveguide and comprising stacked silicon and nonlinear optical material layers, optionally with the silicon and nonlinear optical material layers of the base section matching the sizes of the silicon and nonlinear optical material layers of the hybrid waveguide. The tapered structure further comprises a deformed section connected to the base section and comprising stacked silicon and nonlinear optical material layers, wherein the nonlinear optical material layer of the deformed section extends from the base section's nonlinear optical material layer and gradually decreases in size away from the base section, while the silicon layer of the deformed section extends from the base section's silicon layer and remains unchanged in size.

In other embodiments, the tapered structure comprises a base section, connected to the hybrid waveguide and comprising stacked silicon and nonlinear optical material layers; an intermediate section, connected to the base section and comprising stacked silicon and nonlinear optical material layers; and a deformed section, connected to the intermediate section and comprising stacked silicon and nonlinear optical material layers. Wherein the silicon layer of the intermediate section comprises silicon layers extending from both the deformed and base sections, with the silicon layer extending from the deformed section positioned above the silicon layer extending from the base section. Additionally, the nonlinear optical material layer of the deformed section extends from the intermediate section's nonlinear optical material layer and gradually decreases in size away from the intermediate section.

In some embodiments, the end face of the nonlinear optical material layer in the deformed section includes an inclined surface.

In some embodiments, when viewed from above, the inclined surface of the nonlinear optical material layer in the deformed section forms an angle with the silicon layer in the same section. Optionally, the angle is less than 45°.

In some embodiments, in the intermediate section, the thickness of the silicon layer extending from the deformed section is greater than that of the silicon layer extending from the base section.

In some embodiments, in the intermediate section, the width of the silicon layer extending from the deformed section is smaller than that of the silicon layer extending from the base section.

In some embodiments, when viewed from above, in the intermediate section, the width of the silicon layer extending from the base section initially gradually increases and then gradually decreases along the extension direction.

In some embodiments, when viewed from above, in the intermediate section, the width of the tail end of the silicon layer extending from the deformed section gradually decreases along the extension direction.

In some embodiments, the electro-optical modulator comprises at least two hybrid waveguides, at least one beam splitter, and at least one beam combiner. The output end of the beam splitter is connected to the coupling end at the input side of the corresponding hybrid waveguide via a first connecting waveguide, and the input end of the beam combiner is connected to the coupling end at the output side of the corresponding hybrid waveguide via a second connecting waveguide.

Additionally, embodiments of the present invention provide a method for manufacturing an electro-optical modulator. The method is suitable for manufacturing the electro-optical modulator described in any of the embodiments above, comprising a hybrid waveguide with electrodes positioned on either side of the waveguide. The method comprises: providing a first component, which at least includes a silicon layer and conductive wiring structures located on both sides of the silicon layer; providing a second component, which includes a nonlinear optical material layer and conductive wiring structures located on both sides of the nonlinear optical material layer; and bonding the first component to the second component to form the electro-optical modulator, wherein the silicon layer and the nonlinear optical material layer are stacked to form the hybrid waveguide, and the conductive wiring structures on both sides of the silicon layer are electrically connected to those on both sides of the nonlinear optical material layer, thereby forming the electrodes.

In some embodiments, the nonlinear optical material layer includes at least one of the following: a barium titanate layer, a lithium niobate layer, a lithium tantalate layer, and an organic polymer. The silicon layer includes at least one of a monocrystalline silicon layer and a silicon nitride layer.

In some embodiments, the hybrid waveguide includes a first hybrid waveguide formed by stacking a monocrystalline silicon layer over a barium titanate layer. Optionally, the hybrid waveguide includes a second hybrid waveguide formed by stacking a silicon nitride layer over a lithium niobate layer.

In some embodiments, providing the first component comprises: forming a first element using a front-end-of-line process, wherein the first element comprises the silicon layer; performing a thinning treatment on a side of the first element adjacent to the silicon layer; and forming conductive wiring structures on both sides of the region corresponding to the silicon layer in the thinned first element, thereby obtaining the first component.

In some embodiments, providing the second component comprises: forming a nonlinear optical material layer on a wafer; removing the nonlinear optical material from areas outside of a predetermined region, with a nonlinear optical material layer in the predetermined region retained, thereby obtaining a second element, wherein the predetermined region corresponds to the area for overlap with the silicon layer; depositing a silicon oxide layer on top of the second element to obtain a third element; and forming conductive wiring structures on both sides of the region corresponding to the retained nonlinear optical material layer in the third element, thus obtaining the second component.

In some embodiments, the conductive wiring structures comprise conductive structures within holes.

In some embodiments, the method further comprises forming bonding structures on at least one surface of the electro-optical modulator, which is formed by bonding the first component to the second component, for bonding with additional components.

According to the aforementioned embodiments, the present invention utilizes front-end-of-line processes to fabricate the first component, which can be a photonic integrated circuit chip. Nonlinear optical materials, such as barium titanate, lithium niobate, lithium tantalate, or organic polymers, are used to fabricate the second component, like a barium titanate thin film or a lithium niobate thin film. Back-end-of-line processes (e.g., wafer bonding, through-hole wiring, etc.) are then employed to combine the barium titanate thin film or lithium niobate thin film with the photonic integrated circuit chip. The resulting modulator is capacitive, with very small capacitance, making it extremely easy to drive, with no static power consumption and very low dynamic power consumption. Therefore, the present invention enables the integration of compact, high-efficiency, and low-power electro-optical modulator technologies, which may be incompatible with traditional Complementary Metal-Oxide-Semiconductor (CMOS) processes, into classical silicon-based optoelectronic processes.

Aspects, features, advantages and the like of the embodiments will be described in greater detail by reference to the drawings. The aspects, features, advantages and the like will be apparent according to the detailed description by reference to the drawings.

### BRIEF DESCRIPTION OF THE DRAWINGS

Figure 1 is a schematic diagram of the structure of an electro-optical modulator according to an embodiment of the present invention.
Figure 2 is a schematic diagram of the structure of an electro-optical modulator according to another embodiment of the present invention.
Figure 3a is a top view showing one example of the tapered structure of the coupling end of an electro-optical modulator according to an embodiment of the present invention.
Figure 3b is a sectional view along line A-A of the structure shown in Figure 3a.
Figure 3c is a sectional view along line B-B of the structure shown in Figure 3a.
Figure 4a is a top view showing another example of the tapered structure of the coupling end of an electro-optical modulator according to an embodiment of the present invention.
Figure 4b is a sectional view along line a-a of the structure shown in Figure 4a.
Figure 4c is a sectional view along line b-b of the structure shown in Figure 4a.
Figure 4d is a sectional view along line c-c of the structure shown in Figure 4a.
Figure 5a is a top view showing an example of the hybrid waveguide of an electro-optical modulator according to an embodiment of the present invention.
Figure 5b is a longitudinal sectional view of the hybrid waveguide shown in Figure 5a.
Figure 6a is a top view showing another example of the hybrid waveguide of an electro-optical modulator according to an embodiment of the present invention.
Figure 6b is a longitudinal sectional view of the hybrid waveguide shown in Figure 6a.
Figure 7 is a sectional view of a product at a stage of a manufacturing method of an electro-optical modulator according to an exemplary embodiment of the present invention.
Figure 8 is a sectional view of the product at the next stage after the one shown in Figure 7.
Figure 9 is a sectional view of the product at the next stage after the one shown in Figure 8.
Figure 10 is a sectional view of the product at another stage of a manufacturing method of an electro-optical modulator according to an exemplary embodiment of the present invention.
Figure 11 is a sectional view of the product at yet another stage of a manufacturing method of an electro-optical modulator according to an exemplary embodiment of the present invention.
Figure 12 is a sectional view of the product at the next stage after the one shown in Figure 11.

### DETAI'LED DESCRIPTION OF THE INVENTION

To facilitate understanding of the various aspects, features, and advantages of the technical solutions of the present invention, the following specific description is provided in conjunction with the accompanying drawings. It should be understood that the various embodiments described below are for illustrative purposes only and are not intended to limit the scope of protection of the present invention.

The terms "comprising," "comprise," "including," "include," or similar terms used herein are open-ended and should be interpreted as "including but not limited to." The term "approximately" or similar terms refer to an acceptable range of error, within which a person skilled in the art can address the technical problem and achieve a substantially similar technical effect.

Additionally, the terms "connection," "connected," "connecting," or the like encompasses both direct and indirect means of connection. Therefore, if a first device is described as being connected to a second device, it indicates that the first device may be directly connected to the second device or indirectly connected through other devices.

The terms "first," "second," and so on, are used to distinguish between different devices, modules, or structures and do not indicate order or imply that "first" and "second" are of different types. Furthermore, in the description, claims, and drawings of the application, certain processes are described with multiple operations, steps, or procedures in a specific sequence. These operations, steps, or procedures may be executed in an order different from their appearance in the document or may be performed in parallel. Step numbers such as S1, S2, etc., are merely used to differentiate between different operations and do not imply any execution order. Additionally, these processes may include more or fewer operations, and these operations can be performed sequentially or in parallel.

In the embodiments of the present invention, an electro-optical modulator comprises a hybrid waveguide with a first electrode and a second electrode positioned on both sides of the hybrid waveguide. The hybrid waveguide comprises stacked silicon and nonlinear optical material layers. The electro-optical modulator further comprises coupling ends extending from both ends of the hybrid waveguide for optical coupling, with at least one of these coupling ends including a tapered structure. One of the coupling ends is used to introduce an optical signal (e.g., optical wave) into the hybrid waveguide, while the other is used to output the optical signal (e.g., optical wave) from the hybrid waveguide. In an optional embodiment, both coupling ends of the hybrid waveguide adopt the tapered structure. In some embodiments, the nonlinear optical material layer comprises at least one of the following: barium titanate (BTO) layer, lithium niobate layer, lithium tantalate layer, or an organic polymer layer. Additionally, or alternatively, the silicon layer may include at least one of a monocrystalline silicon (C-Si) layer or a silicon nitride layer.

In some embodiments, the electro-optical modulator comprises at least two hybrid waveguides, at least one beam splitter, and at least one beam combiner. The output end of the beam splitter is connected to the coupling end at the input side of the corresponding hybrid waveguide via a first waveguide for connection, and the input end of the beam combiner is connected to the coupling end at the output side of the corresponding hybrid waveguide via a second waveguide for connection.

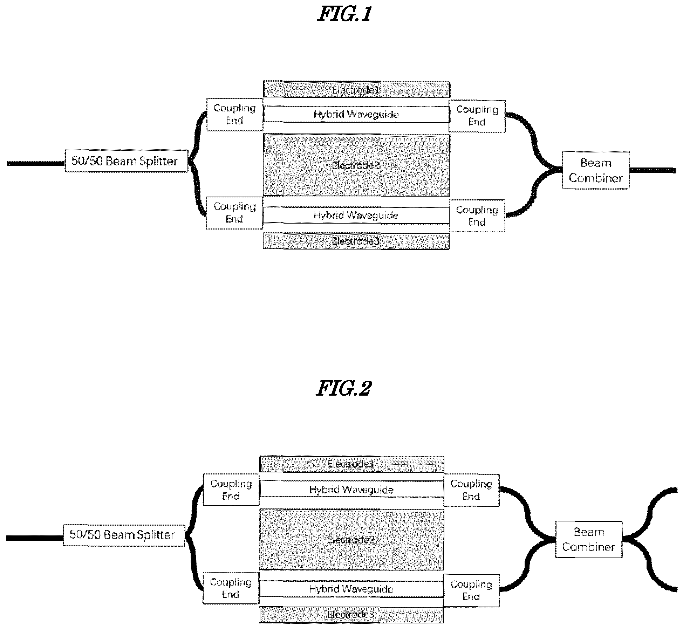

Figure 1 illustrates an embodiment of an electro-optical modulator. As shown in Figure 1, the electro-optical modulator comprises two hybrid waveguides and three electrodes (electrodes 1, 2, and 3). The beam splitter is a 50/50 beam splitter, with its two output ends connected to the two hybrid waveguides via first connecting waveguides (e.g., silicon waveguides). The output ends of the hybrid waveguides are connected to the input ends of the beam combiner via second connecting waveguides (e.g., silicon waveguides). The combiner is a 1×2 combiner, and its output end can be connected to another beam splitter or another electro-optical modulator through a waveguide such as a silicon waveguide to form a modulator network. The modulator network can be used to construct a photonic neural network for performing large-scale data operations such as machine learning.

Figure 2 illustrates another embodiment of an electro-optical modulator. As shown in Figure 2, the structure of the modulator is essentially the same as the one depicted in Figure 1. The primary difference is that the beam combiner in the embodiment is a 2×2 combiner. The two output ends of the combiner can each be connected to other beam splitters or electro-optical modulators, forming a modulator network for photonic computing.

In the embodiments shown in Figures 1 and 2, the two hybrid waveguides share one electrode (electrode 2). However, the present invention is not limited to this configuration. In an alternative embodiment, two separate electrodes can be provided for each hybrid waveguide. The two electrodes may be positioned between the two adjacent hybrid waveguides, with each electrode operating in conjunction with its corresponding hybrid waveguide.

In the embodiments shown in Figures 1 and 2, both ends of the hybrid waveguides are coupled to the corresponding connecting waveguides through coupling ends, with each coupling end containing a tapered structure. Due to the significant mode-field difference between the hybrid waveguide (e.g., BTO-Si hybrid waveguide) and silicon waveguide, direct connection without a tapered structure would result in considerable insertion loss. In an exemplary embodiment, two variations of the tapered structure are proposed to account for the varying thickness of the silicon layer in the hybrid waveguide. These two tapered structure examples are explained below.

### [Tapered Structure Example 1]

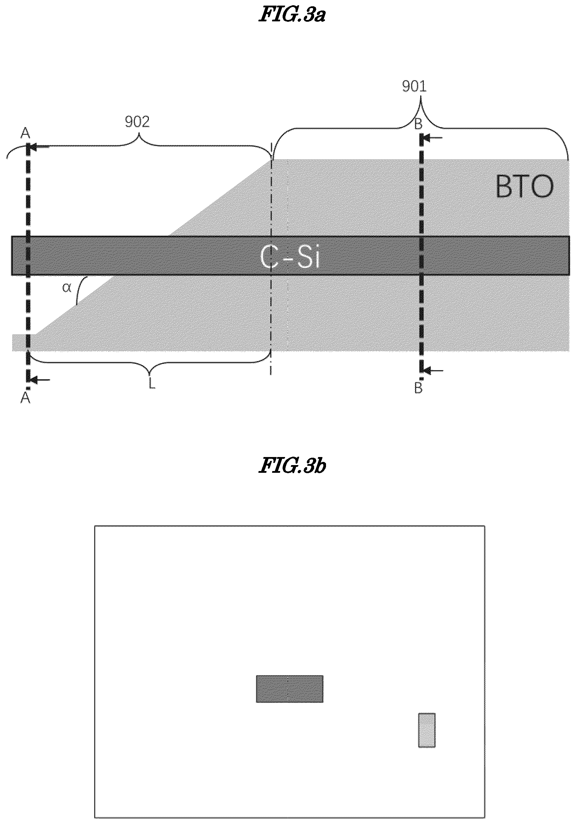

As shown in Figures 3a-3c, a tapered structure comprises a base section 901 and a deformed section 902. The base section 901 comprises a nonlinear optical material layer (e.g., BTO) and a silicon layer (e.g., C-Si) stacked over the nonlinear optical material layer. The deformed section 902 is connected to the base section 901 and also includes stacked nonlinear optical material (e.g., BTO) and silicon (e.g., C-Si) layers. The nonlinear optical material layer in the deformed section 902 extends from that in the base section 901, and its size gradually decreases in the direction away from the base section 901, while the silicon layer in the deformed section 902 extends from that in the base section 901 without changing its size. In some embodiments, the thickness of the nonlinear optical material layer is typically in the range of several hundred nanometers, such as approximately 200 to 800nm.

In some embodiments, as shown in Figure 3a, the end face of the nonlinear optical material layer in the deformed section includes an inclined surface which appears as an inclined edge in the top view. This inclined surface forms an angle (α) with the silicon layer. In some embodiments, the angle α is less than 45°, with smaller angles resulting in lower modulator loss. In some embodiments, the length L of the tapered structure corresponding to the inclined surface in the deformed section 902 is approximately 3 to 10µm. If the length L is too small, it will result in a larger angle α, leading to higher modulator loss; if the length L is too large, the size of the coupling end increases, which hinders the miniaturization of the modulator.

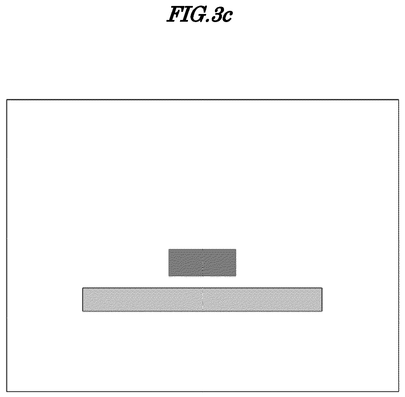

Figure 3b shows a cross-sectional view along line A-A in Figure 3a. At the end of the deformed section 902 farthest from the base section 901, the silicon layer and the nonlinear optical material layer are spaced apart, with no overlapping region. Figure 3c shows a cross-sectional view along line B-B in Figure 3a. As shown, in the base section, the silicon layer and the nonlinear optical material layer are arranged vertically, with the nonlinear optical material layer being wider than the silicon layer. The projection of the silicon layer in the vertical direction overlaps with the nonlinear optical material layer.

### [Tapered Structure Example 2]

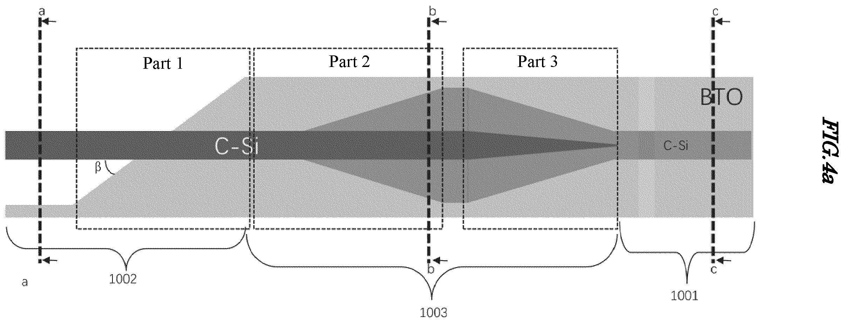

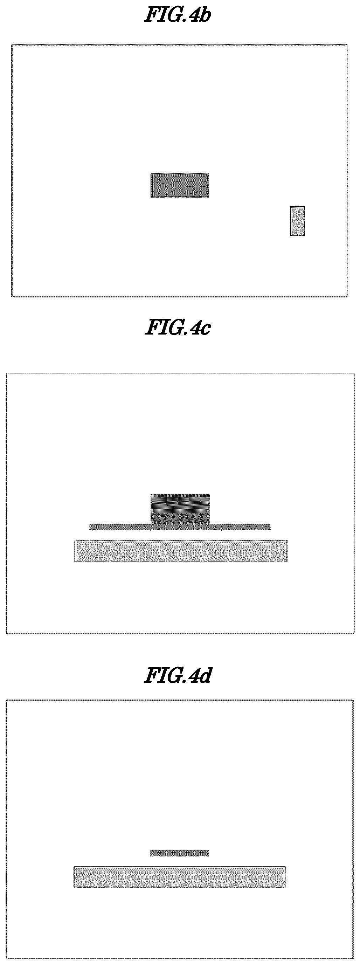

As shown in Figures 4a-4d, a tapered structure comprises a base section 1001, a deformed section 1002, and an intermediate section 1003 located between the base section 1001 and the deformed section 1002. The base section 1001, deformed section 1002, and intermediate section 1003 are connected. The base section 1001 comprises a nonlinear optical material layer (e.g., BTO) and a first silicon layer (e.g., C-Si) stacked over the nonlinear optical material layer. The deformed section 1002 includes a second silicon layer (e.g., C-Si) and a nonlinear optical material layer (e.g., BTO). The intermediate section 1003 comprises a nonlinear optical material layer (BTO), the first silicon layer (C-Si) extending from the base section 1001, and the second silicon layer (C-Si) extending from the deformed section 1002.

In some embodiments, the thickness of the second silicon layer is greater than that of the first silicon layer. In the intermediate section 1003, the second silicon layer is located above the first silicon layer. Optionally, the thickness of the first silicon layer is typically around 70 to 150nm. In other embodiments, the thickness of the second silicon layer can be the same as or smaller than that of the first silicon layer. In some embodiments, when viewed from above, the width of the first silicon layer extending from the base section 1001 in the intermediate section 1003 first increases and then decreases along its extension direction, while the width of the second silicon layer extending from the deformed section 1002 gradually decreases along its extension direction. In alternative embodiments, the width of the first silicon layer extending from the base section 1001 remains constant along the extension direction. Alternatively, the width of the second silicon layer extending from the deformed section 1002 remains unchanged. In other embodiments, the width of the first silicon layer extending from the base section 1001 in the intermediate section 1003 is greater than the width of the second silicon layer extending from the deformed section 1002.

The nonlinear optical material layer in the deformed section 1002 extends from the nonlinear optical material layer in the intermediate section 1003, and its size gradually decreases in the direction away from the intermediate section. In some embodiments, as shown in Figure 4a, the end face of the nonlinear optical material layer in the deformed section includes an inclined surface appearing as an inclined edge when viewed from above, forming an angle (β) with the second silicon layer (C-Si). In some embodiments, the angle β is less than 45°, with a smaller angle β resulting in lower modulator loss. In some embodiments, in the example shown in Figure 4a, the length of part 1 (corresponding to the length of the tapered structure with the inclined surface) is approximately 3 to 10µm, while the lengths of part 2 and part 3 are each about 20 to 30µm. If the lengths of part 1, part 2, and part 3 are too short, the transitions in the nonlinear optical material layer, the first silicon layer, and the second silicon layer will be too abrupt, leading to higher modulator loss. If the lengths of part 1, part 2, and part 3 are too long, the size of the coupling end increases, which hinders the miniaturization of the modulator.

According to the above embodiments, Tapered Structure Example 1 is applicable in cases where the thickness of the silicon layer in the hybrid waveguide matches the thickness of the silicon layer in the connection waveguide, whereas Tapered Structure Example 2 is suitable for cases where the silicon layer in the hybrid waveguide is further thinned.

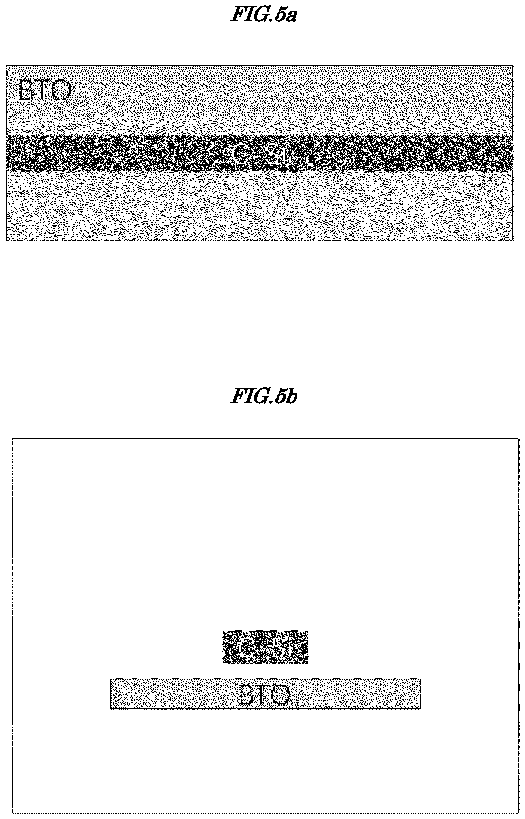

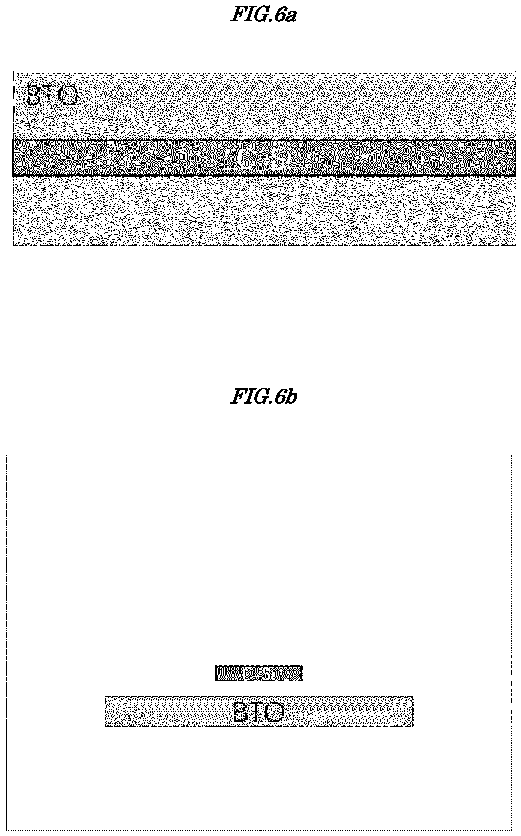

In various embodiments of the present invention, the hybrid waveguide serves as the main region for achieving electro-optic modulation. In traditional silicon-based modulators, the refractive index is adjusted by modulating the carrier distribution through applied voltage or current signals, thereby affecting the effective refractive index of the mode field. In contrast, the operating mechanism of the hybrid waveguide relies on the nonlinear optical effect of the nonlinear optical material, wherein the refractive index of the material is adjusted by the intensity of the applied electric field, while the refractive index of the silicon layer remains unchanged. For example, in a BTO-Si hybrid waveguide, based on the nonlinear optical effect of the BTO material, the refractive index of the BTO material is modulated by varying the applied electric field, such that the overlap between the optical mode and the BTO layer affects the modulation efficiency. The greater the overlap, the more significant the influence of the BTO material on the effective refractive index, resulting in higher modulation efficiency. To adjust the overlap, the thickness of the silicon layer can be modified, while its width is selected based on wavelength requirements. Generally, the thinner the silicon layer in the hybrid waveguide, the more the mode field is distributed in the BTO material, resulting in higher efficiency. Figure 5a and Figure 5b show Example 1 of a hybrid waveguide, while Figure 6a and Figure 6b show Example 2 of a hybrid waveguide. The main difference between these two examples lies in the thickness of the silicon layer (C-Si).

In some embodiments, the coupling end of Example 1 of the hybrid waveguide is suitable for using the aforementioned Tapered Structure Example 1, while the coupling end of Example 2 of the hybrid waveguide is suitable for using Tapered Structure Example 2. In alternative embodiments, Tapered Structure Example 1 can also be suitable for the hybrid waveguide in Example 2, and Tapered Structure Example 2 can be suitable for the hybrid waveguide in Example 1.

The following describes the method for manufacturing an electro-optical modulator, which is suitable for producing the electro-optical modulator of any of the aforementioned embodiments or examples. For clarity, the example illustrates only one hybrid waveguide.

In an embodiment of the present invention, the method for manufacturing an electro-optical modulator, which at least includes a hybrid waveguide with electrodes located on both sides of the hybrid waveguide, comprises the following steps:
S 1. Providing a first component that includes at least a silicon layer and conductive wiring structures positioned on both sides of the silicon layer. In some embodiments, the conductive wiring structures are located outside the silicon layer on both sides. In some embodiments, the conductive wiring structures are adjacent to or positioned within the sides of the silicon layer.
S2. Providing a second component that includes a nonlinear optical material layer and conductive wiring structures located on both sides of the nonlinear optical material layer. In some embodiments, the conductive wiring structures are adjacent to the nonlinear optical material layer or positioned within the sides of the nonlinear optical material layer. In some embodiments, the conductive wiring structures are positioned outside the nonlinear optical material layer on both sides.
S3. Bonding the first component with the second component to form the electro-optical modulator, wherein the silicon layer and the nonlinear optical material layer are stacked to form the hybrid waveguide, and wherein the conductive wiring structures located on both sides of the silicon layer are electrically connected to those located on both sides of the nonlinear optical material layer to form the electrodes.

In some embodiments, the first component includes a Photonic Integrated Circuit (PIC) chip and an interlayer dielectric (ILD). In step S1, the first component can be fabricated using the front-end-of-line (FEOL) processes for the PIC in a commercial wafer fab. The first component comprises the silicon layer and conductive wiring structures, with the silicon layer including at least one of a monocrystalline silicon layer (C-Si) or a silicon nitride layer. In some embodiments, the first component may also comprise one or more other optical devices in addition to the silicon layer and conductive wiring structures.

In some embodiments, independently of step S1, step S2 involves depositing a certain thickness of a nonlinear optical material layer and conductive wiring structures onto a silicon-on-insulator (SOI) wafer to form the second component. The nonlinear optical material layer comprises at least one of the following: barium titanate (BTO), lithium niobate, lithium tantalate, or organic polymer. It should be understood that step S2 is independent of step S1, and there is no dependency between the two. Step S1 can be carried out before step S2, or step S2 can be carried out before step S1. Alternatively, steps S1 and S2 can be performed in parallel to improve production efficiency.

In some embodiments, in step S3, during back-end-of-line (BEOL) processes of the PIC, the first component is directly bonded to the second component using a wafer bonding process to form the electro-optical modulator. The silicon layer and the nonlinear optical material layer are stacked together to form the hybrid waveguide. In some embodiments, the hybrid waveguide is formed by stacking a monocrystalline silicon layer (C-Si) over a barium titanate (BTO) layer. Alternatively, the hybrid waveguide can be formed by stacking a silicon nitride layer over a lithium niobate layer.

The electro-optical modulator produced by the above process is capacitive, with an extremely small capacitance, making it very easy to drive, requiring no static power consumption, and exhibiting very low dynamic power consumption. Compared to existing modulators, the electro-optical modulator offers lower energy consumption and a more compact size.

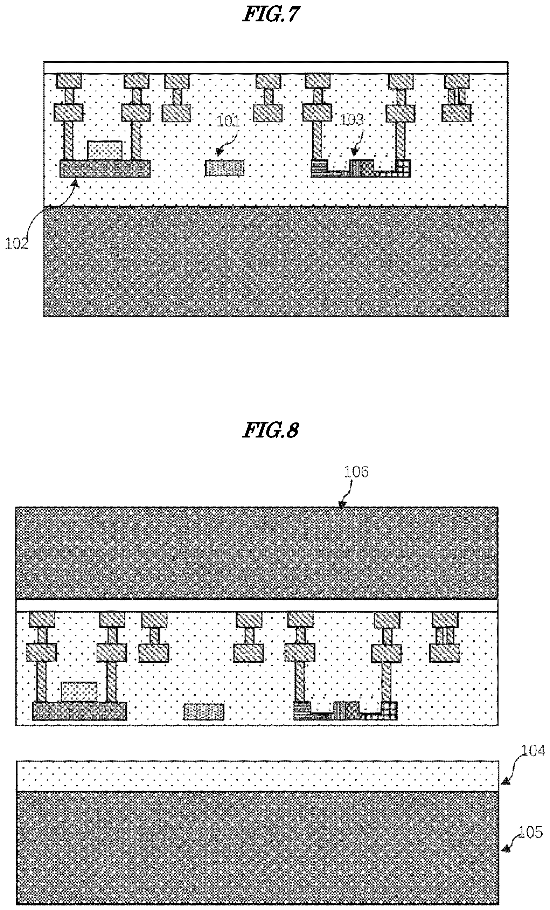

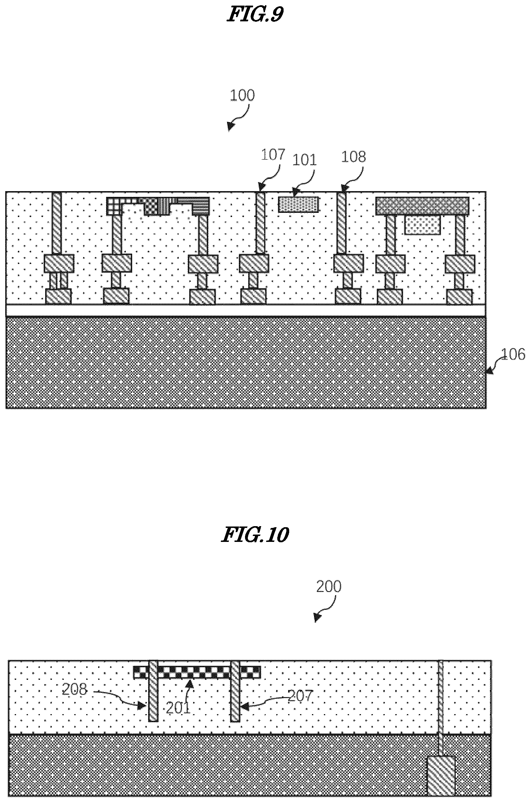

In an exemplary embodiment, in step S 1, providing the first component includes the following procedures:
1) Forming the first element using a front-end-of-line process. As shown in Figure 7, the first element may be a finished or semi-finished stacked chip that includes a monocrystalline silicon layer 101. Optionally, the front-end processes can be completed in a commercial wafer fab to obtain the stacked chip. In some embodiments, the first element may also include a germanium-silicon photodetector (Ge-Si PD) 102, a modulator based on carrier dispersion effects, or a Variable Optical Attenuator (VOA) 103, as well as other passive devices. The first element is prepared using a silicon-on-insulator (SOI) substrate, wherein the monocrystalline silicon layer 101 is positioned in the top silicon layer of the SOI, separated from the bottom silicon by an embedded silicon dioxide layer, with a dielectric layer, which can be made of silicon dioxide, covering the top.
2) Performing a thinning treatment on the first element. In some embodiments, as shown in Figure 8, a new substrate 106 is bonded to the top surface of the first element, and then the original substrate 105 is removed. Part of the silicon dioxide 104 beneath the first element is also removed to thin the silicon dioxide layer beneath the monocrystalline silicon layer 101 to a thickness of 0 to 50 nm. If the silicon dioxide layer beneath the monocrystalline silicon layer 101 is greater than 50 nm, the distance between the monocrystalline silicon layer 101 and the subsequently formed nonlinear material layer is too large, which results in a less effective hybrid waveguide and poor modulation effect.
3) Forming conductive wiring structures for electrodes on at least both sides of the region corresponding to the monocrystalline silicon layer 101 in the thinned first element, resulting in the first component 100, as shown in Figure 9. The conductive wiring structures comprise a first conductive wiring structure 107 and a second conductive wiring structure 108. Specifically, as shown in Figure 9, the first element processed in step 2 is flipped 180°, so that the new substrate 106 faces downward. Windows are opened in required positions, for example, on both sides of the monocrystalline silicon layer 101, corresponding to the regions of the nonlinear optical material layer to be bonded. Metal is then deposited to form the first conductive wiring structure 107 and the second conductive wiring structure 108, and the surface is subjected to chemical-mechanical polishing. In this embodiment, the first conductive wiring structure 107 and the second conductive wiring structure 108 are conductive structures with through-substrate vias (TSVs). In alternative embodiments, the first conductive wiring structure 107 and the second conductive wiring structure 108 may use other suitable structures such as metal conductive traces or buried lines.

The first component 100 is obtained through the above three processes. In this embodiment, the first component 100 can be a photonic integrated circuit (PIC) chip that includes the monocrystalline silicon layer 101 and other optical devices. For example, other optical devices may comprise a germanium-silicon photodetector (Ge-Si PD) 102, a modulator based on carrier dispersion effects, or a Variable Optical Attenuator (VOA) 103, and connecting waveguides (e.g., silicon waveguides).

In an exemplary embodiment, in step S2, providing the second component includes the following procedures:
I) Forming a nonlinear optical material layer on a wafer, such as a barium titanate (BTO) layer. In some embodiments, a nonlinear optical material layer with a certain thickness is obtained on an SOI wafer using techniques such as epitaxial growth or chemical solution deposition.
II) Removing the nonlinear optical material layer from areas outside of a predetermined region, retaining a nonlinear optical material layer in the predetermined region, thereby obtaining a second element. The predetermined region corresponds to the area for overlap with the monocrystalline silicon layer 101. Specifically, unwanted parts of the nonlinear optical material layer can be removed using dry etching.
III) Depositing a silicon dioxide layer further on top of the second element to planarize the surface of the nonlinear optical material layer, resulting in a third element.
IV) Forming conductive wiring structures on both sides of the region corresponding to the retained nonlinear optical material layer in the third element to obtain the second component. Specifically, openings are made at the required positions, and metal is deposited to form the conductive wiring structures. Alternatively, through-substrate vias (TSVs) can be employed in back-end-of-line processing to create conductive structures with through-substrate vias. Optionally, the upper surface of the second component is polished and thinned as much as possible, specifically thinning the silicon dioxide on top of the nonlinear optical material layer to reduce the gap between the nonlinear optical material layer and the monocrystalline silicon layer. Optionally, the thickness of the nonlinear optical material layer is generally in the range of several hundred nanometers.

As shown in Figure 10, the second component 200 obtained through the above four procedures comprises a nonlinear optical material layer 201, a third conductive wiring structure 207, and a fourth conductive wiring structure 208. In this embodiment, the third conductive wiring structure 207 and the fourth conductive wiring structure 208 are conductive structures with through-substrate vias. The present invention is not limited to this configuration. In alternative embodiments, the third conductive wiring structure 207 and the fourth conductive wiring structure 208 may utilize other suitable structures such as metal conductive traces or buried lines.

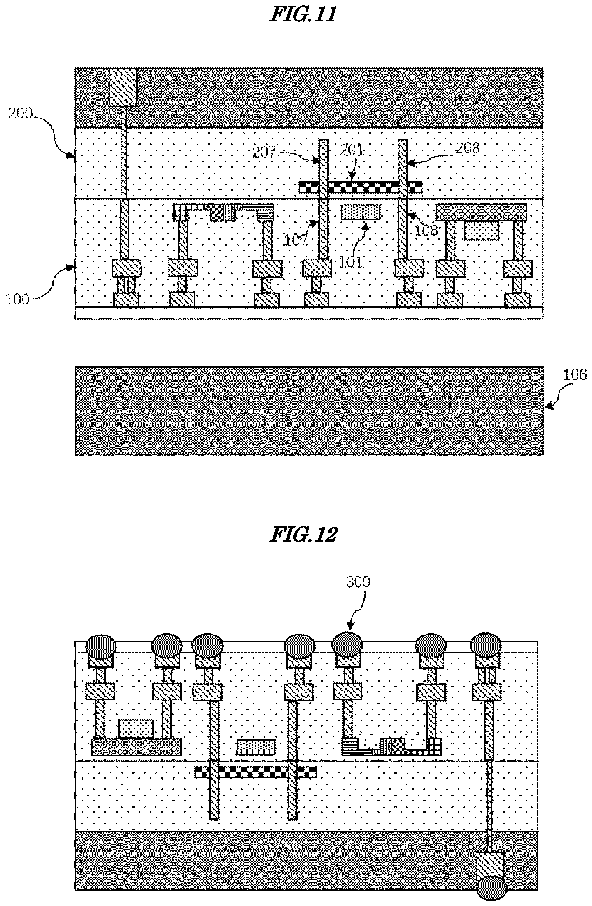

In an exemplary embodiment, in step S3, during the back-end-of-line process of the PIC, the first component 100 and the second component 200 are directly bonded together using a wafer bonding process to obtain the electro-optical modulator. In some embodiments, as shown in Figure 11, the second component 200 is bonded to the upper surface of the first component 100, and the new substrate 106 is removed, such that the nonlinear optical material layer 201 is positioned above the monocrystalline silicon layer 101 to form the hybrid waveguide, the first conductive wiring structure 107 is electrically connected to the third conductive wiring structure 207 to form the first electrode, and the second conductive wiring structure 108 is electrically connected to the fourth conductive wiring structure 208 to form the second electrode, thus obtaining the electro-optical modulator. In the electro-optical modulator, the first and second electrodes are used to apply an electric field to the hybrid waveguide, which alters the refractive index of the hybrid waveguide, thus modulating the optical signal passing through it. In some embodiments, when the electric signals applied by the first and second electrodes carry data or information, the modulation embeds the data or information into the optical signal. In some embodiments, the electro-optical modulator is used to construct a photonic neural network, allowing computation of information carried by the optical signal using the weight information carried by the electric signal, such as convolution operations.

In some embodiments, as shown in Figure 12, for the product (i.e., the electro-optical modulator) obtained by bonding the first component and the second component, bonding structures 300 are formed on at least one surface of the product for bonding with additional components. The bonding structures 300 can comprise solder balls, micro-bumps (µBump), etc. In some embodiments, micro-bumps are formed on the upper surface of the electro-optical modulator primarily for interconnection with an electronic chip (EIC), while micro-bumps on the lower surface are used for connecting to a packaging substrate.

It should be understood by those skilled in the art that although the above embodiment mainly describes the nonlinear optical material as BTO, the present invention is not limited to this. The nonlinear optical material may also be lithium niobate, lithium tantalate, organic polymer, etc.

It should be understood by those skilled in the art that the above disclosure is illustrative of the invention's embodiments and does not limit the scope of patent protection sought by this application. Equivalent variations made based on the embodiments of the invention are still within the scope covered by the claims of this application.

## Claims

1. An electro-optical modulator, comprising:
a hybrid waveguide including stacked silicon and nonlinear optical material layers; and
an electrode including a first electrode and a second electrode disposed on both sides of the hybrid waveguide;
wherein the electro-optical modulator further comprises coupling ends, extending from both ends of the hybrid waveguide, for optical coupling, with at least one of these coupling ends including a tapered structure.

2. The electro-optical modulator according to claim 1, wherein the nonlinear optical material layer comprises at least one of the following: a barium titanate layer, a lithium niobate layer, a lithium tantalate layer, or an organic polymer layer; and/or
wherein the silicon layer comprises at least one of the following: a monocrystalline silicon layer or a silicon nitride layer.

3. The electro-optical modulator according to claim 1, wherein the vertical projection of the silicon layer in the hybrid waveguide is within the vertical projection range of the nonlinear optical material layer.

4. The electro-optical modulator according to claim 1, wherein the tapered structure comprises:
a base section, connected to the hybrid waveguide and comprising stacked silicon and nonlinear optical material layers; and
a deformed section, connected to the base section and comprising stacked silicon and nonlinear optical material layers;
wherein the nonlinear optical material layer in the deformed section extends from the nonlinear optical material layer in the base section and gradually decreases in size away from the base section, while the silicon layer in the deformed section extends from the silicon layer in the base section and remains unchanged in size.

5. The electro-optical modulator according to claim 1, wherein the tapered structure comprises:
a base section, connected to the hybrid waveguide and comprising stacked silicon and nonlinear optical material layers;
an intermediate section, connected to the base section and comprising stacked silicon and nonlinear optical material layers; and
a deformed section, connected to the intermediate section and comprising stacked silicon and nonlinear optical material layers;
wherein the silicon layer in the intermediate section comprises a silicon layer extending from the deformed section and a silicon layer extending from the base section, with the silicon layer extending from the deformed section positioned above the silicon layer extending from the base section, and
wherein the nonlinear optical material layer in the deformed section extends from the nonlinear optical material layer in the intermediate section and gradually decreases in size away from the intermediate section.

6. The electro-optical modulator according to claim 4 or 5, wherein the end face of the nonlinear optical material layer in the deformed section comprises an inclined surface.

7. The electro-optical modulator according to claim 6, wherein, when viewed from above, the inclined surface of the nonlinear optical material layer in the deformed section forms an angle with the silicon layer in the same section.

8. The electro-optical modulator according to claim 7, wherein the angle is less than 45°.

9. The electro-optical modulator according to claim 5, wherein, in the intermediate section, the thickness of the silicon layer extending from the deformed section is greater than that of the silicon layer extending from the base section.

10. The electro-optical modulator according to claim 5, wherein, when viewed from above, in the intermediate section, the width of the silicon layer extending from the base section initially gradually increases and then gradually decreases along the extension direction.

11. The electro-optical modulator according to claim 5, wherein, when viewed from above, in the intermediate section, the width of the tail end of the silicon layer extending from the deformed section gradually decreases along the extension direction.

12. The electro-optical modulator according to claim 1, comprising at least two hybrid waveguides, at least one beam splitter, and at least one beam combiner;
wherein the output end of the beam splitter is connected to the coupling end at the input side of the corresponding hybrid waveguide via a first connecting waveguide, and
wherein the input end of the beam combiner is connected to the coupling end at the output side of the corresponding hybrid waveguide via a second connecting waveguide.

13. A method for manufacturing an electro-optical modulator according to any of claims 1 to 12, comprising:
providing a first component, which includes at least a silicon layer and conductive wiring structures located on both sides of the silicon layer;
providing a second component, which includes a nonlinear optical material layer and conductive wiring structures located on both sides of the nonlinear optical material layer; and
bonding the first component to the second component to form the electro-optical modulator,
wherein the silicon layer and the nonlinear optical material layer are stacked to form the hybrid waveguide, and the conductive wiring structures on both sides of the silicon layer are electrically connected to those on both sides of the nonlinear optical material layer, thereby forming the electrodes on both sides of the hybrid waveguide.

14. The method according to claim 13, wherein the hybrid waveguide comprises a first hybrid waveguide formed by stacking a monocrystalline silicon layer over a barium titanate layer.

15. The method according to claim 13, wherein the hybrid waveguide comprises a second hybrid waveguide formed by stacking a silicon nitride layer over a lithium niobate layer.

16. The method according to claim 13, wherein providing the first component comprises:
forming a first element using a front-end-of-line process, wherein the first element includes the silicon layer;
performing a thinning treatment on a side of the first element adjacent to the silicon layer; and
forming conductive wiring structures on both sides of the region corresponding to the silicon layer in the thinned first element to obtain the first component.

17. The method according to claim 13, wherein providing the second component comprises:
forming a nonlinear optical material layer on a wafer;
removing the nonlinear optical material from areas outside of a predetermined region, with a nonlinear optical material layer in the predetermined region retained, thereby obtaining a second element, wherein the predetermined region corresponds to the area for overlap with the silicon layer;
depositing a silicon dioxide layer further on top of the second element to obtain a third element; and
forming conductive wiring structures on both sides of the region corresponding to the retained nonlinear optical material layer in the third element to obtain the second component.

18. The method according to claim 13, wherein the conductive wiring structures comprise conductive structures with through-substrate vias.

19. The method according to claim 13, further comprising:
forming bonding structures on at least one surface of the obtained electro-optical modulator for bonding with additional components.
